# EUROPEAN PATENT APPLICATION

(11) **EP 4 299 547 A1**
(43) Date of publication of application: **03.01.2024**
(21) Application number: 22181681.2
(22) Date of filing: 28.06.2022
(51) Int. Cl.: C04B 28/02, C04B 28/04, C04B 28/06, C04B 28/14, C04B 111/60, C04B 111/62, C04B 111/72

(54) **ENVIRONMENTALLY FRIENDLY MORTAR COMPOSITIONS**

(71) Applicant: Sika Technology AG, 6340 Baar (CH)
(72) Inventor: Hesselbarth, Daniela, 8048 Zürich (CH); Gallucci, Emmanuel, 8048 Zürich (CH); Juilland, Patrick, 3005 Bern (CH); Frunz, Lukas, 8305 Dietlikon (CH)
(74) Representative: Sika Patent Attorneys

(57) **Abstract**

A mortar composition comprises:
a) 15 - 50 wt.-%, especially 32 - 38 wt.-%, of a mineral binder, whereby:
- with respect to 100 parts by weight of the mineral binder, the mineral binder comprises 40 - 70 parts by weight of cement and 30 -60 parts by weight of a cement substitute based on clay, limestone and gypsum;
- and whereby, with respect to 100 parts by weight of the cement substitute, the cement substitute comprises:
35 - 65 parts by weight of clay, especially calcined clay,
1 - 20 parts by weight of gypsum, and
rest to 100 parts by weight of limestone;

b) 50 - 80 wt.-%, especially 62 - 65 wt.-%, of aggregates, especially sand;
c) 0 - 10 wt.-%, especially 0 - 6 wt.-% of one or more additives;
whereby all of the wt.-% are with respect to the dry weight of the mortar composition.

## Description

### Technical field

The invention relates to a mortar composition based on limestone, clay, gypsum and cement. In addition, the invention is related to a workable mortar composition and a hardened mortar composition obtainable by hardening the workable mortar composition. Further aspects of the invention are related to a method for producing a mortar composition and to the use of a mortar composition for specific applications.

### Background art

In construction industry, a large amount of cement-based materials, such as e.g. mortar or concrete, is used. However, cement production is an energy-intensive process, responsible for a significant amount of the world's carbon dioxide (CO₂) emissions. In order to reduce carbon dioxide emissions, cement in binder compositions can be partly replaced by so-called supplementary cementitious materials (SCM). These are for example pozzolanic materials, such as e.g. pulverized fly ash or natural pozzolanas, latent hydraulic products, like ground granulated blast furnace slag, or even inert materials, such as e.g. limestone. Although such cement replacements with SCM may be able to partially overcome the problem of energy consumption in the cement production, the resulting mineral binder often lack performance compared to ordinary Portland cements (OPC). However, during last years, some supplementary cementitious materials like fly ash and ground granulated blast furnace slag became scarce. Therefore, alternative solutions were developed, which are based on sufficiently abundant materials.

An interesting development in this regard are so called "LC3 binders". These are cementitious mineral binders consisting partly of Portland cement and partly of a cement substitute. Thereby, the cement substitute is based on a combination of calcined clay, limestone and gypsum. This approach enables a high level of substitution of cement in the mineral binder, i.e. around 50 wt.-%. Despite the high degree of substitution of cement, LC3 binders feature sufficiently good mechanical properties and rather high durability. At the same time production costs and environmental impact can be lowered.

However, until today, no satisfactory fully formulated mortar products suitable for practical use, such as e.g. grouts or repair mortars, based on LC3 binders are known.

### Disclosure of the invention

It is an object of the present invention to provide mortar compositions suitable for practical applications and having as few negative effects on the environment as possible. Nevertheless, the mortar compositions should have favorable properties, especially in terms of workability, curing, mechanical strength and/or durability. Surprisingly, it has been found that these objects are achieved by the features of claim 1. Thus, the core of the invention is a mortar composition comprising:
a) 15 - 50 wt.-%, especially 32 - 38 wt.-%, of a mineral binder, whereby:
   - with respect to 100 parts by weight of the mineral binder, the mineral binder comprises 40 - 70 parts by weight of cement and 30 - 60 parts by weight of a cement substitute based on clay, limestone and gypsum,
   - and whereby, with respect to 100 parts by weight of the cement substitute, the cement substitute comprises:
      35 - 65 parts by weight of clay, especially calcined clay,
      1 - 20 parts by weight of gypsum, and
      rest to 100 parts by weight of limestone;
b) 50 - 80 wt.-%, especially 62 - 65 wt.-%, of aggregates, especially sand;
c) 0 - 10 wt.-%, especially 0 - 6 wt.-%, of one or more additives;
whereby all of the wt.-% are with respect to the dry weight of the mortar composition.

The inventive mortar compositions turned out to be highly beneficial. Specifically, they are good in terms of workability and in hardened state they feature good mechanical performance and excellent durability. Especially, the mechanical strength of the hardened mortars after 28 days is at a level suitable for a large variety of applications. Also, shrinkage during hardening is at a low level such that for most applications no shrinkage reducers are required. Regarding durability, sulphate resistance of the mortars is at a high level while carbonation is low. Due to the significant proportion of cement substitute, the carbon footprint of the mortar compositions and the products produced thereof is much lower when compared with an ordinary cementitious mortar.

Because of the beneficial properties, the inventive mortars can be used for a large variety of different applications. For example, the inventive mortars can be formulated and used as cementitious tile adhesive, grouting material, self-levelling underlayment, self-levelling overlayment, render, repair mortar, masonry thin join mortar or concrete, screed, wall leveler for interior or exterior use, non-shrinking grout, thin joint mortar, waterproofing mortar and/or anchoring mortar.

Although the mineral binder of the inventive mortar compositions comprise rather high proportions of cement substitutes based on clay, especially calcined clay, gypsum, and limestone, the mortar compositions are highly suitable for practical use and have a performance comparable with conventional mortar composition based on pure cement binders. Without being bound by theory, it is believed that the specific components and their proportions are responsible for these surprising findings.

Additional aspects of the invention are subject of further independent claims. Particularly preferred embodiments are outlined throughout the description and the dependent claims.

### Ways of carrying out the invention

A first aspect of the present invention is directed to a mortar composition comprising:
a) 15 - 50 wt.-%, especially 32 - 38 wt.-%, of a mineral binder, whereby:
   - with respect to 100 parts by weight of the mineral binder, the mineral binder comprises 40 - 70 parts by weight of cement and 30 - 60 parts by weight of a cement substitute based on clay, limestone and gypsum,
   - and whereby, with respect to 100 parts by weight of the cement substitute, the cement substitute comprises:
      35 - 65 parts by weight of clay, especially calcined clay,
      1 - 20 parts by weight of gypsum, and
      rest to 100 parts by weight of limestone;
b) 50 - 80 wt.-%, especially 62 - 65 wt.-%, of aggregates, especially sand;
c) 0 - 10 wt.-%, especially 0 - 6 wt.-%, of one or more additives;
whereby all of the wt.-% are with respect to the dry weight of the mortar composition.

The cement present in the mineral binder preferably comprises or consists of Portland cement, aluminate cement and/or sulphoaluminate cement.

In particular, a mineral binder of the present invention does comprise calcium aluminate cement and/or calcium sulphoaluminate cement in not more than 5 wt.-%, preferably not more than 2 wt.-%, relative to the total dry weight of the mineral binder.

Especially, the content of Portland cement in a mineral binder of the present invention is higher than the content of calcium aluminate cement and/or calcium sulphoaluminate cement.

Most preferred the cement is Portland cement, in particular cement of type CEM I according to standard EN 197.

The term "aluminate cement" stands in particular for a cement with an aluminum content, measured as Al₂O₃, of at least 30 wt.-%, especially at least 35 wt.-%, in particular 35 - 58 wt.-%. Preferably, the aluminate cement is aluminate cement according to standard EN 14647:2006. Preferably, the sulphoaluminate cement is calcium sulphoaluminate cement.

"Clays" within the present context are solid materials composed to at least 30 wt.-%, preferably to at least 35 wt.-%, especially to at least 75 wt.-%, each relative to its dry weight, of clay minerals. Such clay minerals preferably belong to the kaolin group (such as kaolinite, dickite, nacrite or halloysite), the smectite group (such as montmorillonite, nontronite or saponite), the vermiculite group, serpentine, palygorskite, sepiolite, chlorite, talc, pyrophyllite, micas (such as biotite muscovite, illite, glauconite, celadonite, and phengite) or mixtures thereof. Clay minerals belonging to the kaolin group, especially kaolinite, and micas, especially muscovite and illite, as well as mixtures thereof are especially preferred.

Clays within the present context can be any type of clays, for example crude clays and/or calcined clays.

Crude clays are e.g. clay minerals extracted from a quarry, optionally purified and optionally dried.

Calcined clays may be for example low-temperature calcined clays and/or high-temperature calcined clays. Low-temperature calcined clays are clays that have been thermally treated at temperatures between 500 - 1200°C. Such low-temperature calcination typically leads to removal of interlayer water and at least partial, preferably full, de-hydroxylation. For example, low-temperature calcined clay minerals may be produced in rotary kiln or in a flash calciner. High-temperature calcined clays are clay minerals that have been thermally treated at temperatures above 1200°C and typically between 1300 - 1400°C. High-temperature calcined clays typically are crystalline or contain high amounts of crystalline phases, especially of mullite.

Clays within the present context preferably are calcined clays, especially low-temperature calcined clays. A low-temperature calcined clay is a clay material that has been put to a heat treatment, preferably at a temperature between 500 - 1200°C, or in a flash calcination process at temperatures between 800 - 1100°C. A suitable flash calcination process is for example described in WO 2014/085538. A low-temperature calcined clay is an anhydrous material.

It is preferred within the present context that during the calcination of clay the clay material is dehydroxylated to an amorphous material while the formation of crystalline high temperature aluminosilicate phases such as mullite is prevented.

Low-temperature calcined clays, and especially low-temperature calcined kaolinite, generally are amorphous, have a significantly higher specific surface as compared to the original clay, and have a pozzolanic activity.

According to embodiments, calcined clays are produced by heat treatment separately from other constituents of the binder composition and especially separately from the Portland cement and/or other pozzolanic and/or latent hydraulic materials present.

Calcined clays, and especially calcined kaolinite, generally are amorphous, have a significantly higher specific surface as compared to the original clay, and have a pozzolanic activity.

Especially, the clay comprises or consists of calcined clays from the kaolin group, the smectite group and/or the illite group. In particular, the calcined clays are selected from metakaolin, calcined illite, and/or calcined montmorillonite.

According to especially preferred embodiments of the present invention, the calcined clay is metakaolin. Metakaolin is a material resulting from the calcination of kaolinite or minerals that are rich in kaolinite, e.g. have a content of kaolinite of at least 30 wt.-%, preferably to at least 35 wt.-%, relative to its dry weight. Calcination temperatures for the manufacturing of metakaolin typically are in the range of 500 - 900 °C.

According to embodiments, the clay, especially calcined clay, is ground to a powder with a 45 µm residue as measured according to ASTM C 430-96 (2003) of at least 0.5 wt.-%, preferably at least 2 wt.-%, still more preferably at least 10 wt.-%, especially at least 20 wt.-%.

Especially, the gypsum comprises calcium sulfate hemihydrate and/or anhydrite. Calcium sulfate hemihydrate (CaSO₄ · 0.5 H₂O) may be present as α-hemihydrate or β-hemihydrate. Anhydrite is in particular anhydrite II and/or anhydrite III.

According to embodiments, limestone stands for calcium carbonate (CaCO₃). In preferred embodiments of the present invention the chemical composition of limestone is as defined in standard EN 197-1:2011. In the alternative, limestone may also stand for magnesium carbonate, dolomite, and or mixtures of magnesium carbonate, dolomite, and/or calcium carbonate. It is especially preferred that limestone within the present context is a naturally occurring limestone mainly consisting of calcium carbonate (typically calcite and/or aragonite) but typically also containing some magnesium carbonate and/or dolomite. Limestone may also be a naturally occurring marl.

Limestone, within the present context, in particular is a ground material that is not heat treated. Especially, the limestone is not decarbonated. According to embodiments, the limestone has a Blaine surface of 3'000 - 15'000 cm²/g. The Blaine surface is measured as described in standard EN 196-6:2010.

Especially, the limestone of the cement substitute has a D50 particle size of 1 - 125 µm. The D50 particle size means that 50% of the particles are smaller than the specified value and 50% are larger than the specified value. In particular, the particle size distribution of the limestone of the cement substitute is such that the particle size D2 and the particle size D98 both are within the range of 1 - 125 µm.

Similar to the D50 particle size described above, the D98 particle size means that 98% of the particles are smaller than the specified value and 2% are larger than the specified value. Accordingly, the D2 particle size means that 2% of the particles are smaller than the specified value and 98% are larger than the specified value.

The cement, clay, gypsum and limestone of the mineral binder are in particular present in powder form.

In particular, the Blaine fineness of the mineral binder in the mortar composition is from 300 - 6'000 m²/g, especially 1'000 - 4'500 m²/g, in particular 2'000 - 4'000 m²/g. The Blaine fineness is measured as described in standard EN 196-6:2010

The aggregates include any type of mortar aggregates. In particular, the aggregates feature a density of 2.0 - 3.0 kg/dm³.

A particle size of the aggregates preferably is 0.01 - 8 mm, especially 0.03 - 4 mm, preferably 0.05 - 2 mm, in particular 0.08 - 1 mm.

Within the present context, the particle size for particles equal to or larger than 0.1 mm can be determined by sieve analysis, in particular with sieves featuring square openings. Especially, the particle size is expressed by the opening size of the test sieves just passed by the particles concerned.

The size of particles having a size below 0.1 mm according to sieve analysis can be determined by laser diffraction as described in ISO 13320:2009. Preferably, a particle size of non-spherical or irregular particles is represented by the equivalent spherical diameter of a sphere of equivalent volume. Especially, the lower values of the ranges given for the particle size represent D1 values whereas the upper values of the ranges given for the particle size represent D99 values. Put differently, in this case, 1% of the particles have a lower particle size than the lower value of a range, whereas 1% of the particles have a larger particle size than the upper value of a range.

In particular, the aggregates comprise sand, quartz and/or calcium carbonate. Most preferred is sand. Where calcium carbonate is used as aggregates, such calcium carbonate is chemically and/or physically different from the other components of the mortar composition. Especially, if calcium carbonate is used as aggregates, it is chemically and/or physically different form the limestone of the cement substitute and/or from a hardening accelerator.

In particular, calcium carbonate as aggregate has a D50 particle size > 125 µm, whereas the D50 particle size of the limestone in the cement substitute is 1 -125 µm. Additionally preferably, the D98 particle size of limestone in the cement substitute is smaller than the D2 particle size of the calcium carbonate used as aggregates.

Especially, before mixing with water, the mortar composition is present as a dry particulate material, in particular a dry powder.

Especially, the mineral binder is present with a proportion of 35 - 37 wt.-% with respect to the dry weight of the mortar composition. These proportions tunrned out to be highly beneficial.

According to a highly preferred embodiment, the cement substitute with respect to 100 parts by weight of the cement substitute comprises:
35 - 45, especially 37 - 42, parts by weight of clay, especially calcined clay,
3 - 10, especially 4 - 7, parts by weight of gypsum;
rest to 100 parts by weight of limestone.

Especially, with respect to 100 parts by weight of the cement substitute, the cement substitute comprises 40 parts by weight of clay, especially calcined clay, 5 parts by weight of gypsum and 55 parts by weight of limestone.

With these proportions, the advantages of the invention are even more pronounced.

However, for specific applications, other proportions might be suitable as well. For example, with respect to 100 parts by weight of the cement substitute, in another embodiment, the cement substitute comprises 63 parts by weight of clay, especially calcined clay, 7 parts by weight of gypsum and 30 parts by weight of limestone.

The one or more additive that may optionally be present in the mortar compositions is in particular a concrete, mortar and/or grout admixture as defined according to EN 934-2:2009+A1:2012. For example, the one or more additive is selected from setting time regulators, accelerators, retarders, air entrainers, defoamers, shrinkage reducers, rheology modifiers, thixotropic agents, corrosion inhibitors, preservatives, chromium reducers, fibers, stabilizers and/or dyes.

In a further preferred embodiment, the mortar composition comprises a hardening accelerator additive, especially a calcium compound, e.g. calcium oxide and/or calcium carbonate.

The hardening accelerator additive, especially the calcium carbonate, is chemically and/or physically different from the other components of the mortar composition. Especially, if calcium carbonate is used as hardening accelerator additive, it is chemically and/or physically different form the limestone and aggregate of the cement substitute.

In particular, the hardening accelerator additive is present in the form of a powder having a particle size that is smaller than a particle size of the limestone of the cement substitute. Thereby, preferably, the D50 particle size of the particles of the hardening accelerator additive is smaller than the D50 particle size of the limestone particles of the cement substitute. Additionally preferably, the D98 particle size of the particles of the hardening accelerator additive is smaller than the D2 particle size of the limestone particles of the cement substitute.

The particle size can be determined in particular by laser diffraction, preferably in accordance with standard ISO 13320: 2009.

A proportion of the hardening accelerator additive preferably is from 0.001 - 2 wt.-%, especially 0.01 - 1 wt.-%, with respect to the dry weight of the mortar composition. Such additives allow to increase the early strength, e.g. 1 day after mixing with water, of the mortar compositions.

Especially the hardening accelerator additive is present in the form of a powder, in particular with a D98 particle size < 25 µm, especially < 15 µm, in particular < 10 µm, especially < 5 µm. Thereby, preferably, the D50 particle size of the hardening accelerator additive is < 5 µm, especially < 2 µm. These particles sizes are especially effective for accelerating the hardening of the inventive mortar compositions.

If calcium carbonate in the form of a powder is used as hardening accelerator additive, the D50 particle size of the calcium carbonate preferably is < 1 µm, especially < 0.9 µm. Thereby, especially, the D98 particle size of the calcium carbonate is < 5 µm, especially < 2 µm.

In particular, the calcium carbonate or limestone can be used as:
- as hardening accelerator additive with a D50 particle size of the calcium carbonate < 1 µm; and/or
- as component of the cement substitute with a D50 particle size of 1 - 125 µm; and/or
- as aggregate with a D50 particle size > 125 µm.

In particular, the particle size distribution of the limestone of the cement substitute is such that the particle size D2 and the particle size D98 both are within the range of 1 - 125 µm. Additionally preferably, the D98 particle size the calcium carbonate of the hardening accelerator additive is smaller than the D2 particle size of the limestone in the cement substitute, and the D98 particle size of the limestone in the cement substitute is smaller than the D2 particle size of the calcium carbonate used as aggregates.

Especially, the mortar composition comprises a plasticizer additive. The plasticizer additive may be selected from the group of lignosulfonates, gluconates, naphtalenesulfonates, melamine sulfonates, vinyl copolymers and/or polycarboxylate ethers. Polycarboxylate ethers are most preferred.

The polycarboxylate ether in particular is a comb polymer, which has a polycarboxylate backbone and side chains, wherein the side chains are bound preferably via ester, ether, amide and/or imide groups to the polycarboxylate backbone. Ester, ether and/or amide groups are preferred, especially esters and/or ether groups.

The backbone has at least one acid unit or a salt thereof. The acid unit in particular is an α-unsaturated monocarboxylic or dicarboxylic acid, such as acrylic acid, methacrylic acid, maleic anhydride, maleic acid, itaconic acid, crotonic acid, or fumaric acid. The acid unit is preferably acrylic acid, methacrylic acid, maleic acid and/or a salt thereof and/or combinations thereof.

The side chains preferably are attached to (meth)acrylic ester, vinyl ether, (meth)allyl ether and/or isoprenol ether monomers that are polymerized with the at least one acid unit of the backbone.

More particularly the side chains comprise polyalkylene oxide side chains, preferably polyethylene oxide side chains. Preferably at least 50 mol%, more particularly at least 75 mol%, preferably at least 95 mol% or 100 mol% of the side chains contain or consist of polyalkylene oxide.

The fraction of ethylene oxide units in the polyalkylene oxide side chains, based on all the alkylene oxide units present in the side chains, is preferably more than 90 mol%, more particularly more than 95 mol%, preferably more than 98 mol%, especially 100 mol%.

The polyalkylene oxide side chains have in particular a structure of formula -[AO]ₙ-R^{a}. In this formula, in particular,
- A is a C₂ to C₅ alkylene, which may be branched or unbranched. Most preferred A is a C₂ alkylene; and/or
- R^{a} is preferably H or a C₁ to C₂₀ alkyl group, cyclohexyl group, or alkylaryl group; and/or
- with advantage, n is 2 to 300, more particularly 10 to 200 or 15 to 150, especially 25 - 70; and/or
- a number-average molecular weight (Mₙ) of the side chains is 500 - 6'000, especially 1'000 - 4'000, in particular 2'000 - 3'000 g/mol and/or
- a weight-average molecular weight (M_{w}) of the polycarboxylate ether is especially 5'000-150'000 g/mol, preferably 10'000-100'000 g/mol and/or
- a number-average molecular weight (Mₙ) of the polycarboxylate ether is advantageously 3'000-100'000 g/mol, more particularly 8'000-70'000 g/mol.

The weight-average molecular weight is determined by gel permeation chromatography (GPC) using polyethylene glycol (PEG) as standard. This technique is known per se to the person skilled in the art.

Especially preferred are comb polymers with a molar ratio of acid unit(s) to side chains from 0.5 - 5, in particular 1 - 4, especially 2.5 - 4. This results in mortar compositions having a good workability or flow table spread, respectively, which is even maintained for a relatively long time, e.g. up to 60 minutes.

Thereby preferably, the number-average molecular weight (Mₙ) of the side chains is 500 - 6'000, especially 1'000 - 4'000, in particular 2'000 - 3'000 g/mol.

According to embodiments, comb polymers comprise (meth)acrylic acid monomers and vinyl ether, (meth)allyl ether and/or isoprenol ether monomers carrying the side chains. Especially, the comb polymers comprise (meth)acrylic acid monomers and (meth)allylether monomers carrying the side chains.

Methods for producing such comb polymers are known in the art. Two main methods are industrially used for synthesizing such comb polymers. The first method is radical polymerisation of ethylenically unsaturated monomers. Side chains of the resulting comb polymer are already attached to monomer units. Comb polymers with a desired structure and properties are obtained by specific selection and ratio of the monomers in the polymerization reaction solution.

In a second method known as polymer analogous reaction, a polycarboxylic acid backbone is synthesized in a first step. Subsequently, side chains are attached to the polycarboxylic acid backbone, for example by esterification, amidation or etherisation reactions with alcohols, amines and the like. Such polymer analogous reactions, as well as resulting comb polymers, are described, for example, in WO 97/35814, WO 95/09821, DE 100 15 135 A1, EP 1 138 697 A1, EP 1 348 729 A1 and WO 2005/090416. Details about the polymer analogous reaction are disclosed, for example, in EP 1 138 697 B1 on page 7, line 20 to page 8, line 50, as well as in its examples, or in EP 1 061 089 B1 on page 4, line 54 to page 5, line 38 as well as in its Examples.

Corresponding comb polymers are also commercially marketed by Sika Schweiz AG under the commercial name series ViscoCrete^{®}.

Preferably, a proportion of the plasticizer additive is from 0.001 - 2 wt.-%, especially 0.01 - 1 wt.-%, with respect to the dry weight of the mortar composition.

Plasticizers can be used to adjust the workability and open time of the mortar composition after mixing with water.

Further preferred a setting retarder additive is present in the mortar composition. Preferably, the setting retarder additive is selected from boric acid, a salt of boric acid, a salt of phosphoric acid, sorbitol, a saccharide and/or hydroxyl carboxylic acids.

In particular, the setting retarder additive is a hydroxyl carboxylic acid and/or a salt thereof, especially preferred a gluconate, most preferred sodium gluconate.

Preferably, a proportion of the setting retarder additive is from 0.0001 - 0.1 wt.-%, especially 0.001 - 0.05 wt.-%, with respect to the dry weight of the mortar composition.

Setting retarder additives allow for controlling the open time of the mortar composition or the time the mortar stays workable, respectively, after mixing with water.

Especially preferred, a setting retarder additive is added to the mortar composition if a weight proportion of the clay, in particular calcined clay, especially metakaolin, in the cement substitute is at least 40 parts by weight, with respect to the total weight of the cement substitute. As it turned out, clay, especially calcined clay, especially at proportions of 40 or more parts by weight in the cement substitute may significantly shorten the open time. If this is to be prevented, a setting retarding additive can be used.

With a highly preferred mortar composition:
- the mineral binder is present with a proportion of 35 - 37 wt.-% with respect to the dry weight of the mortar composition;
- the cement substitute with respect to 100 parts by weight of the cement substitute comprises:
   37 - 42, parts by weight of clay, especially calcined clay,
   4 - 7, parts by weight of gypsum;
   rest to 100 parts by weight of limestone;
- optionally, the mortar, with respect to the dry weight of the mortar composition, comprises 0.01 - 1 wt.-%, of a plasticizer additive, especially a polycarboxylate ether as described above;
- optionally, the mortar, with respect to the dry weight of the mortar composition, comprises 0.01 - 1 wt.-% of a calcium compound, especially calcium oxide and/or calcium carbonate powder, whereby the calcium compound is chemically and/or physically different from the other components of mortar composition, especially, the D98 particle size of the calcium compound is smaller than the D98, more preferably the D2, particle size of the limestone of the cement substitute;
- optionally, the mortar, with respect to the dry weight of the mortar composition, comprises 0.001 - 0.05 wt.-% of the setting retarder additive, especially a hydroxyl carboxylic acid and/or a salt thereof, in particular sodium gluconate.

Thereby, preferably, at least the plasticizer additive is present with the above-mentioned proportions.

Especially, the mortar composition is a cementitious tile adhesive, a grouting material, a self-levelling underlayment, a self-levelling overlayment, a render, a repair mortar, a masonry thin join mortar or concrete, a screed, a wall leveler for interior or exterior use, a non-shrink grout, a thin joint mortar, a waterproofing mortar, or an anchoring mortar.

A cementitious tile adhesive is especially according to standard EN 12004-1. A grouting material is especially according to standard EN 13888. A self-levelling underlayment or a self-levelling overlayment is especially according to standard EN 13813. A render is especially according to standard EN 998-1. A repair mortar is especially according to standard EN 1504-3. A masonry mortar or concrete is especially according to standards EN 998-2 and EN 206-1. A screed is especially according to standard EN 13813. A non-shrink grout is especially according to standard EN 1504-6. A thin joint mortar is especially according to standard EN 998-2. A waterproofing mortar is especially according to standard EN 1504-2. An anchoring mortar is especially according to standard EN 1504-6.

According to a preferred embodiment, the dry mortar composition is a one-component mixture. That means that all the individual materials and/or substances are intermixed in one receptacle. One-component compositions are in particular easy to handle and exclude the risk of a mix up or wrong dosing of individual components by users.

However, it is in principle possible to provide a two-component mortar composition or even a multi-component mortar composition. A first component may e.g. be present in a first receptacle comprising the mineral binder. A second component, present in a second receptacle, may comprise the aggregates. Other distributions are possible as well. Two- or multi-component mortar compositions allow e.g. for adjusting the mortar composition with regard to specific applications.

Another aspect of the present invention is directed to a workable mortar composition comprising a mortar composition as described above and water. Thereby, preferably, a weight ratio of water to the mineral binder is from 0.25 - 0.7, especially 0.3 - 0.5. The proportion of water can be chosen depending on the desired application.

A further aspect of the present invention is directed to a hardened mortar composition obtainable by hardening a workable mortar composition as described above.

In yet another aspect, the present invention relates to the use of a dry mortar composition as described above or a workable mortar composition as described above as a cementitious tile adhesive, a grouting material, a self-levelling underlayment, a self-levelling overlayment, a render, a repair mortar, a masonry thin join mortar or concrete, a screed, a wall leveler for interior or exterior use, a non-shrink grout, a thin joint mortar, a waterproofing mortar, or an anchoring mortar.

Furthermore, the present invention is concerned with a method for producing a mortar composition as described above whereby 15 - 50 wt.-%, especially 32 - 38 wt.-%, of a mineral binder as defined above is mixed with 50 - 80 wt.-%, especially 62 - 65 wt.-%, of aggregates, especially sand, and optionally 0 - 10 wt.-%, especially 0 - 6 wt.-%, of one or more additives as defined above, whereby all wt.-% are relative to the total dry weight of the mortar composition.

For obtaining the mortar composition in workable state, water with a weight ratio of water to the mineral binder from 0.25 - 0.7, especially 0.3 - 0.5 can be mixed with the other constituents of the mortar composition.

Further advantageous configurations of the invention are evident from the exemplary embodiments.

### Exemplary embodiments

### Grout composition

Dry high-strength grout compositions based on mineral binder and sand (0 - 2.2 mm) were produced as indicated in tables 1 and 2.

The mineral binder of examples A, C, D, E, and F, with respect to 100 parts by weight of the mineral binder, consisted of 48 parts by weight of Portland cement and 52 parts by weight of cement substitute, whereby the cement substitute, with respect to 100 parts by weight of the cement substitute, consisted of: 37 parts by weight of calcined clay (metakaolin), 5 parts by weight of gypsum and 58 parts by weight of limestone. The mineral binder of example B, with respect to 100 parts by weight of the mineral binder, consisted of 50 parts by weight of Portland cement and 50 parts by weight of cement substitute, whereby the cement substitute, with respect to 100 parts by weight of the cement substitute, consisted of: 40 parts by weight of calcined clay (metakaolin), 5 parts by weight of gypsum and 55 parts by weight of limestone.

Thereby, the amount of Portland cement, calcined clay, gypsum, as well as the total amount of calcium carbonate (originating from the mineral binder and the fine calcium carbonate) is the same in all of examples A - F.

A first plasticizer P1 used in the compositions was a comb polymer based on acrylic acid monomers and polyethelene glycol methallylether monomers. Thereby, the polyethelene glycol methallylether monomers have an average weight of 2'400 g/mol and the molar ratio of the acid unit(s) to side chains is 3.5. A second plasticizer P2 used in the compositions was a similar comb polymer having a molar ratio of the acid unit(s) to side chains of 5.6 instead of 3.5.

The grout compositions was mixed with water (weight ratio of water to total weight of dry mortar composition = 0.38) in order to obtain a workable grout composition. Thereafter, the flow table spread value (FTS) of the workable compositions after mixing with water was assessed according standard EN 12350-5:2009 (without 15 strokes having been performed) at the time intervals indicated in tables 1 and 2.

The tests to determine compressive strength (in N/mm²) were carried out according to EN 196-1:2016 and EN 12190:1998 using prisms (40×40×160 mm).

Tables 1 and 2 give an overview of the grout compositions and their properties.

**Table 1**

| **Example** | **A** | **B** | **C** | **D** |
|---|---|---|---|---|
| **Component** | | | | |
| Mineral binder | 36.9 | 35.6 | 36.9 | 36.9 |
| Plasticizer | 0.105¹⁾ | 0.105¹⁾ | 0.12¹⁾ | 0.105²⁾ |
| Retarder (Na gluconate) | 0.035 | 0.035 | 0.035 | 0.035 |
| Calcium carbonate (fine)^{*} | - | 1.3 | - | - |
| Sand | 62.68 | 62.68 | 62.68 | 62.68 |
| Process chemicals^{#} | 0.271 | 0.271 | 0.271 | 0.271 |
| FTS [mm] | | | | |
| - after 4 min. | 315 | 292 | 290 | 242 |
| - after 20 min. | 287 | 259 | 293 | 172 |
| - after 60 min. | 254 | 225 | 288 | n.m. |
| Compressive strength after 24 hours [MPa] | 21.0 | 23.2 | 18.1 | 18.1 |

| | | | | |
|---|---|---|---|---|
| ¹⁾ Comb polymer P1 ²⁾ Comb Polymer P2 * OmyaCarb Extra GU (available from Omya; D98 = 4 µm, D50 = 0.9 µm) ^{#} Thickener, defoaming agent n.m. = not measurable | | | | |

**Table 2**

| **Example** | **E** | **F** |
|---|---|---|
| **Component** | | |
| Mineral binder | 36.9 | 36.9 |
| Plasticizer | 0.105¹⁾ | 0.105¹⁾ |
| Retarder (Na gluconate) | - | 0.055 |
| Calcium carbonate (fine)^{*} | - | - |
| Sand | 62.68 | 62.68 |
| Process chemicals^{#} | 0.271 | 0.271 |
| FTS [mm] | | |
| - after 4 min. | 125 | 250 |
| - after 20 min. | 142 | 262 |
| - after 60 min. | 119 | 244 |
| Compressive strength after 24 hours [MPa] | 25.0 | 26.0 |

| | | |
|---|---|---|
| ¹⁾ Comb polymer P1 * OmyaCarb Extra GU (available from Omya; D98 = 4 µm, D50 = 0.9 µm) ^{#} Thickener, defoaming agent | | |

As evident from the data in tables 1 and 2, the grout compositions show a flow behavior that makes processing and injection as grouts easy.

Remarkably, when using comb polymer P1 having a molar ratio of the acid unit(s) to side chains of 3.5 (example A - C), the workability or flow table spread, respectively can be maintained for a longer time at a higher level when compared to comb polymer P2 (example D). Likewise, using a retarder helps to improve workability (cf. examples E and F).

When using fine calcium carbonate as an accelerator additive, the compressive strength after 24 hours can be improved when compared to a composition comprising the same amount of coarse calcium carbonate (cf. examples A and B).

### Further tests

*Compressive strength after 28 days:* Compressive strengths as high as 90 MPa were observed.

*Adhesion properties:* Adhesion tests with the grout compositions on concrete substrates according to standard EN 1542:1999 showed bond strengths of >2 MPa after 28 days. Thus, with regard to adhesion, the inventive grout compositions are highly beneficial.

*Physical performance (shrinkage*/*expansion):* Shrinkage/expansion was determined according to EN 12617-4:2002. At 91 days Shrinkage/expansion was - 0.5/0.2 %o.

*Carbonation:* The carbonization depth was measured according to EN 13295:2004 and was found to be 0 mm for the inventive high-strength grout compositions. This is similar to a reference composition, which was based on a similar composition with a binder consisting of 100 parts by weight of Portland cement (no cement substitute). Thus, the resistance of the inventive mortar compositions against carbonation is as good as for ordinary mortar compositions.

*Sulphate resistance:* The sulphate elongation of the inventive high-strength grout compositions measured according to standard SIA 262/1:2019 after 12 weeks was 0.197 %o. For a reference sample based on a similar composition with a binder consisting of 100 parts by weight of Portland cement (no cement substitute), the sulphate elongation was 0.541 ‰.

In summary, although being based on a composition with low carbon footprint, the inventive grout compositions show highly beneficial properties.

It will be appreciated by those skilled in the art that the present invention can be embodied in other specific forms without departing from the spirit or essential characteristics thereof. The presently disclosed embodiment is therefore considered in all respects to be illustrative and not restricted.

## Claims

1. Mortar composition comprising:
a) 15 - 50 wt.-%, especially 32 - 38 wt.-%, of a mineral binder, whereby:
- with respect to 100 parts by weight of the mineral binder, the mineral binder comprises 40 - 70 parts by weight of cement and 30 - 60 parts by weight of a cement substitute based on clay, limestone and gypsum;
- and whereby, with respect to 100 parts by weight of the cement substitute, the cement substitute comprises:
35 - 65 parts by weight of clay, especially calcined clay,
1 - 20 parts by weight of gypsum, and
rest to 100 parts by weight of limestone;
b) 50 - 80 wt.-%, especially 62 - 65 wt.-%, of aggregates, especially sand;
c) 0 - 10 wt.-%, especially 0 - 6 wt.-%, of one or more additives;
whereby all of the wt.-% are with respect to the dry weight of the mortar composition.

2. Mortar composition according to claim 1, wherein the mineral binder is present with a proportion of 35 - 37 wt.-% with respect to the dry weight of the mortar composition.

3. Mortar composition according to any of preceding claims, wherein the cement substitute with respect to 100 parts by weight of the cement substitute comprises:
35 - 45, especially 37 - 42, parts by weight of clay, especially calcined clay,
3 - 10, especially 4 - 7, parts by weight of gypsum;
rest to 100 parts by weight of limestone.

4. Mortar composition according to any of preceding claims, wherein a hardening accelerator additive, especially a calcium compound, e.g. calcium oxide and/or calcium carbonate powder, is present, whereby the hardening accelerator additive is chemically and/or physically different from the other components of the mortar composition, and whereby a proportion of the hardening accelerator additive is from 0.001 - 2 wt.-%, especially 0.01 - 1 wt.-%, with respect to the dry weight of the mortar composition.

5. Mortar composition according to any of preceding claims, wherein a plasticizer additive comprising a polycarboxylate ether is present, whereby the polycarboxylate ether is a comb polymer, which has a polycarboxylate backbone and side chains, wherein the side chains are bound via ester, ether, amide and/or imide groups to the polycarboxylate backbone and the backbone has at least one acid unit or a salt thereof and whereby a molar ratio of the acid unit(s) to the side chains is from 0.5 - 5 wt.-%, in particular 1 - 4 wt.-%, especially 2.5 - 4 wt.-%.

6. Mortar composition according to any of preceding claims, wherein a setting retarder additive, especially a hydroxyl carboxylic acid salt, in particular sodium gluconate, is present, whereby a proportion of the setting retarder additive is from 0.0001 - 0.1 wt.-%, especially 0.001 - 0.05 wt.-%, with respect to the dry weight of the mortar composition.

7. Mortar composition according to claim 6, wherein a weight proportion of the clay, especially calcined clay, in the cement substitute is at least 40 parts by weight, with respect to the total weight of the cement substitute.

8. Mortar composition according to any of preceding claims, wherein the clay comprises calcined clays from the kaolin group, the smectite group and/or the illite group, in particular, the clays are selected from metakaolin, calcined illite, and/or calcined montmorillonite.

9. Mortar composition according to any of preceding claims, wherein the aggregates comprise sand.

10. Mortar composition according to any of preceding claims, whereby:
- the mineral binder is present with a proportion of 35 - 37 wt.-% with respect to the dry weight of the mortar composition;
- the cement substitute with respect to 100 parts by weight of the cement substitute comprises:
37 - 42, parts by weight of clay, especially calcined clay,
4 - 7, parts by weight of gypsum;
rest to 100 parts by weight of limestone;
- optionally, the mortar, with respect to the dry weight of the mortar composition, comprises 0.01 - 1 wt.-%, of a plasticizer additive, especially a polycarboxylate ether;
- optionally, the mortar, with respect to the dry weight of the mortar composition, comprises 0.01 - 1 wt.-% of a calcium compound, especially calcium oxide and/or calcium carbonate powder;
- optionally, the mortar, with respect to the dry weight of the mortar composition, comprises 0.001 - 0.05 wt.-% of the setting retarder additive, especially a hydroxyl carboxylic acid salt, in particular sodium gluconate.

11. Mortar composition according to any of preceding claims whereby the mortar composition is a cementitious tile adhesive, a grouting material, a self-levelling underlayment, a self-levelling overlayment, a render, a repair mortar, a masonry thin join mortar or concrete, a screed, a wall leveler for interior or exterior use, a non-shrink grout, a thin joint mortar, a waterproofing mortar, or an anchoring mortar.

12. Workable mortar composition comprising, a dry mortar composition according to any of preceding claims and water, whereby a weight ratio of water to the mineral binder is from 0.25 - 0.7, especially 0.3 - 0.5.

13. Hardened mortar composition obtainable by hardening a workable mortar composition according to claim 12.

14. Use of a mortar composition according to any of claims 1 - 11 or of a workable mortar composition according to claim 12 as a cementitious tile adhesive, a grouting material, a self-levelling underlayment, a self-levelling overlayment, a render, a repair mortar, a masonry thin join mortar or concrete, a screed, a wall leveler for interior or exterior use, a non-shrink grout, a thin joint mortar, a waterproofing mortar, or an anchoring mortar.

15. Method for producing a mortar composition according to any of claims 1 - 12 whereby 15 - 50 wt.-%, especially 32 - 38 wt.-%, of a mineral binder as defined in any of claims 1 -12 is mixed with 50 - 80 wt.-%, especially 62 - 65 wt.-%, of aggregates, especially sand, and optionally 0 - 10 wt.-%, especially 0 - 6 wt.-% of one or more additives, whereby all wt.-% are relative to the total dry weight of the mortar composition.
